# EUROPÄISCHE PATENTSCHRIFT

(11) **EP 3 898 057 B1**
(45) Veröffentlichungstag und Bekanntmachung des Hinweises auf die Patenterteilung: **29.11.2023**
(21) Anmeldenummer: 19829459.7
(22) Anmeldetag: 12.12.2019
(51) Int. Cl.: B23K 20/10

(54) **ULTRASCHALLSCHWEISSANLAGE MIT ABSTÜTZELEMENT**
ULTRASONIC WELDING SYSTEM WITH SUPPORT ELEMENT
INSTALLATION DE SOUDAGE PAR ULTRASONS À ÉLÉMENT D'APPUI

(30) Priorität: 19.12.2018 DE 102018132839
(43) Veröffentlichungstag der Anmeldung: 27.10.2021
(73) Patentinhaber: Herrmann Ultraschalltechnik GmbH & Co. KG, 76307 Karlsbad (DE)
(72) Erfinder: MANCINI, Raffaele, 76189 Karlsruhe (DE); ZENDLER, Stefan, 75334 Straubenhardt (DE); VOGLER, Ulrich, 88690 Uhldingen-Mühlhofen (DE); SCHWEITZER, Matthias, 75210 Keltern (DE)
(74) Vertreter: WSL Patentanwälte Partnerschaft mbB
(86) Internationale Anmeldenummer: PCT/EP2019/084947
(87) Internationale Veröffentlichungsnummer: WO 2020/126845

(56) Entgegenhaltungen:
- EP-A1- 2 267 765
- WO-A1-2006/036036
- WO-A2-2005/107994
- CH-A- 403 286
- CH-B1- 709 725
- DE-A1-102013 103 887
- DE-A1-102015 110 576
- US-A- 5 947 364
- US-A1- 2015 008 250
- US-B2- 8 353 442

## Beschreibung

Die vorliegende Erfindung betrifft eine Ultraschallschweißanlage mit einer Ultraschallschwingeinheit, die eine Sonotrode und einen Konverter aufweist (siehe z.B. DE 10 2013 103887 A1). Die Sonotrode und der Konverter sind entlang einer Längsachse nebeneinander angeordnet und derart aufeinander abgestimmt, dass die Ultraschallschwingeinheit mit einer Ultraschallschwingung in Richtung der Längsachse mit einer Frequenz f = v/ λ in Resonanz gebracht werden kann, wobei v die Ausbreitungsrichtung der akustischen Ultraschallschwingung innerhalb der Ultraschallschwingeinheit und λ die Wellenlänge der Ultraschallschwingung ist. In diesem Fall bildet sich in der Ultraschallschwingeinheit eine stehende Welle mit Schwingungsknoten und Schwingungsmaxima aus. Im einfachsten Fall zeigt die Sonotrode genau einen Schwingungsknoten und zwei Schwingungsmaxima, d.h. die Sonotrode hat eine Länge, die der halben Wellenlänge A/2 der Resonanzschwingung entspricht.

In der Regel weist die Ultraschallschweißanlage einen Amboss auf, wobei das zu bearbeitende Material zwischen der Siegelfläche der Sonotrode und der Siegelfläche des Amboss angeordnet wird. Der Amboss wird auch als Gegenwerkzeug bezeichnet.

Für die Bearbeitung muss die Ultraschallschwingeinheit gehalten werden. Daher weist die Ultraschallschweißanlage eine entsprechende Halterung auf.

Die Anforderungen an die Schweißqualität nehmen immer weiter zu. Darüber hinaus gibt es Materialien, wie z.B. Metalle, bei deren schweißender Bearbeitung es zu einem erheblichen Verschleiß an den Siegelflächen der Sonotrode kommt, wodurch es notwendig wird, die Sonotrode häufig auszutauschen. Vereinzelt sind bereits Wendesonotroden mit mehreren Siegelflächen vorgeschlagen worden, bei denen die Sonotrode nachdem eine Siegelfläche verschlissen worden ist, gedreht werden kann, um mit einer anderen Siegelfläche weiter zu arbeiten.

Um insbesondere beim Metallschweißen eine hohe Schweißqualität zu erzielen, ist es notwendig, die Siegelflächen der Sonotrode und des Ambosses sehr exakt parallel zueinander zu positionieren. Insbesondere die parallele Positionierung der Ultraschallschwingeinheit bzw. der Siegelfläche der Sonotrode relativ zum Amboss ist bei den bekannten Ultraschallschweißanlagen sehr aufwendig und kann häufig nur von speziell geschultem Personal durchgeführt werden, was insbesondere bei häufigem Austausch der Sonotrode zu störenden Unterbrechungen des Bearbeitungsprozesses führt. Daran ändert auch die Verwendung von Wendesonotroden nichts, da die Sonotrode nach jedem Wenden erneut exakt parallel zum Amboss positioniert werden muss. Dabei ist die axiale und radiale Positionierung der Sonotrode von großer Bedeutung.

Es ist daher Aufgabe der vorliegenden Erfindung, eine Ultraschallschweißanlage bereitzustellen, die eine einfache und schnelle hochpräzise Justierung der Siegelflächen der Sonotrode relativ zum Amboss erlaubt.

Erfindungsgemäß wird diese Aufgabe dadurch gelöst, dass ein Abstützelement zum Abstützen einer senkrecht zur Längsachse auf die Sonotrode aufgebrachten Kraft vorgesehen ist, wobei Sonotrode und Abstützelement zueinander korrespondierende Abstützflächen aufweisen, die zumindest dann, wenn eine Kraft senkrecht zur Längsachse auf die Sonotrode ausgeübt wird, miteinander in Kontakt treten, wobei die Abstützflächen derart ausgebildet sind, dass sie, wenn sie miteinander in Kontakt stehen eine Relativbewegung der Sonotrode gegenüber dem Abstützelement in Richtung der Längsachse verhindern und eine Drehung der Sonotrode um die Längsachse nicht behindern.

Das Abstützelement muss daher im Grunde genommen lediglich einmalig positioniert werden. Durch die erfindungsgemäße Anordnung der korrespondierenden Abstützflächen muss die Sonotrode lediglich mit ihrer Abstützfläche an die korrespondierende Abstützfläche des Abstützelementes gelegt werden, um die Ultraschallschwingeinheit in axialer Richtung zu positionieren. Die Winkelposition kann danach festgelegt werden, da das Abstützelement eine Drehung der Sonotrode um ihre Längsachse zumindest in einem gewissen Umfang erlaubt. Dabei ist die Abstützfläche der Sonotrode an der Sonotrode angeordnet. Sie ist somit Teil der Sonotrode und entweder aus dem gleichen Materialstück gefertigt oder mit der Sonotrode stoffschlüssig verbunden.

Diese Ausführungsform ist zusätzlich insbesondere dann von Vorteil, wenn die Ultraschallschwingeinheit nicht an der Sonotrode, sondern am Konverter oder einem zwischen Sonotrode und Konverter zwischengeschalteten Amplitudentransformator gehalten wird, da dann die während des Schweißens auf die Sonotrode ausgeübte Kraft eine große Hebelwirkung aufweist, die mit Hilfe des Abstützelementes aufgefangen werden kann. Selbst wenn die Siegelflächen von Sonotrode und Amboss exakt parallel zueinander ausgerichtet sind, ändert sich dies, wenn die Sonotrode quer zur Längsachse mit einem Biegemoment belastet wird. Dies ist immer dann der Fall, wenn die Siegelfläche der Sonotrode nicht senkrecht zur Längsachse positioniert ist. Insbesondere beim Metallschweißen ist die Siegelfläche der Sonotrode meist derart orientiert, dass eine Normale auf der Siegelfläche einen rechten Winkel mit der Längsachse einschließt. Da beim Metallschweißen auch relativ hohe Kräfte ausgeübt werden müssen, kommt es zu einer Durchbiegung der Ultraschallschwingeinheit mit der Folge, dass die Siegelfläche der Sonotrode nicht mehr exakt parallel zur Siegelfläche des Amboss ausgerichtet ist, wodurch die Schweißqualität herab gesetzt wird.

Zusätzlich können durch große Biegemomente auch die Komponenten der Ultraschallschwingeinheit beschädigt werden, was es zu vermeiden gilt. Durch das Abstützelement wird die Durchbiegung und damit die Abweichung von der Parallelität reduziert und eine Beschädigung von Komponenten der Halterung oder der Ultraschallschwingeinheit vermieden.

Beispielsweise kann die Sonotrode eine Rippe und das Abstützelement eine Nut aufweisen, die zum Abstützen ineinander greifen. Alternativ kann die Sonotrode auch die Nut und das Abstützelement die Rippe aufweisen. Rippe und Nut haben dann korrespondierende Abstützflächen. Vorzugsweise ist die Rippe oder die Nut der Sonotrode in einem Schwingungsknoten der Resonanzschwingung angeordnet. Die Anordnung im Schwingungsknoten hat den Vorteil, dass die Resonanzschwingung durch eine Berührung zwischen den korrespondierenden Abstützflächen keinen oder nur einen sehr geringen Einfluss auch die Ultraschallschwingung hat. Dabei ist die Anordnung der Rippe an der Sonotrode bevorzugt, da dann durch das Abstützelement die die Ultraschallschwingung am wenigsten beeinflusst wird.

In einer bevorzugten Ausführungsform weisen die Rippe und die Nut einen trapezförmigen Querschnitt auf. Ist beispielsweise die Rippe an der Sonotrode angeordnet, so kann diese als umlaufende Rippe ausgebildet sein, wobei die Dicke der Rippe in radialer Richtung abnimmt. Dabei sind in einer besonders bevorzugten Ausführungsform die Abstützfläche von sowohl Rippe als auch Nut derart ausgebildet, dass sie zwei Abstützflächensegmente aufweisen, die nicht parallel verlaufen und mit der Längsachse einen Winkel einschließen, der <90° ist.

Durch diese Maßnahme ist die axiale Positionierung der Ultraschallschwingeinheit sehr einfach und exakt. Darüber hinaus kann die Beeinflussung der Ultraschallschwingung durch das Abstützelement minimiert werden. In den Schwingungsknoten ist zwar die Amplitude der longitudinalen Ultraschallschwingung minimal, die Dickenschwingung senkrecht zur Längsachse ist jedoch gerade hier am größten. Diese wird durch die gegenüber der Senkrechten auf der Längsachse geneigten Abstützflächen nur wenig behindert. Die Beeinflussung kann noch weiter reduziert werden, wenn das Abstützelement die Sonotrode ausschließlich an korrespondierenden Abstützflächen berührt, die mit der Längsachse einen Winkel einschließen, der <90° ist.

In einer weiteren bevorzugten Ausführungsform ist ein Gegenwerkzeug vorgesehen, wobei Sonotrode und Gegenwerkzeug in einer Richtung senkrecht zur Längsachse relativ zueinander bewegbar sind und das Abstützelement derart positioniert ist, dass eine von dem Gegenwerkzeug eventuell über ein zwischen Sonotrode und Gegenwerkzeug positioniertes Material auf die Sonotrode ausgeübte Kraft auf das Abstützelement übertragen wird. Im Grunde genommen sind somit das Gegenwerkzeug und das Abstützelement auf gegenüberliegenden Seiten der Sonotrode positioniert.

In einer weiteren bevorzugten Ausführungsform ist das Abstützelement derart ausgebildet ist, dass es zwischen zwei Positionen senkrecht zur Längsachse hin und her bewegbar ist, wobei vorzugweise eine Verriegelungsvorrichtung vorgesehen ist, mit welcher das Abstützelement in zumindest einer Position verriegelbar ist.

In einer weiteren bevorzugten Ausführungsform ist eine Halterung zum Halten der Ultraschallschwingeinheit vorgesehen, wobei vorzugsweise das Abstützelement an der Halterung montiert ist.

Dabei kann das Abstützelement relativ zur Halterung zwischen einer Halteposition und einer Freigabeposition hin und her bewegt werden kann. In der Halteposition sind die korrespondierenden Kontaktflächen miteinander in Kontakt, während in der Freigabeposition die Ultraschallschwingeinheit in Richtung der Längsachse bewegt werden kann, ohne dass diese Bewegung von dem Abstützelement behindert wird.

In einer weiteren bevorzugten Ausführungsform weist die Halterung eine Winkelpositionierungsvorrichtung aufweist, wobei die Winkelpositionierungsvorrichtung und die Ultraschallschwingeinheit derart ausgebildet sind, dass sie formschlüssig miteinander verbindbar sind, so dass eine Drehung der Ultraschallschwingeinheit um die Längsachse durch die formschlüssige Verbindung verhindert wird und eine Relativbewegung zwischen der Ultraschallschwingeinheit und der Halterung in Richtung der Längsachse nicht verhindert wird.

Durch diese formschlüssige Verbindung wird die Winkelposition der Ultraschallschwingeinheit in Bezug auf ihre Längsachse festgelegt. Die Ultraschallschwingeinheit muss lediglich mit der Winkelpositionierungsvorrichtung verbunden werden, um die Drehposition festzulegen. Danach kann eine Positionierung der Ultraschallschwingeinheit zumindest in begrenztem Umfang in Richtung der Längsachse vorgenommen werden. Ein weiteres Drehen um die Längsachse wird durch die formschlüssige Verbindung verhindert. Die formschlüssige Verbindung ist dabei derart ausgebildet, dass die Winkelposition in Bezug auf die Längsachse bei in Eingriff treten der formschlüssigen Verbindung in der gewünschten Position ist. Eine weitere Justierung in der Drehrichtung ist nicht notwendig. Die Ultraschallschwingeinheit muss somit nur mit der Winkelpositionierungsvorrichtung verbunden werden, um eine nahezu perfekt parallele Ausrichtung der Siegelflächen von Amboss und Sonotrode zu verwirklichen.

Mithilfe des Abstützelements wird somit die axiale Positionierung der Ultraschallschwingeinheit festgelegt, während mithilfe der Drehpositioniervorrichtung die Winkelposition der Ultraschallschwingeinheit in Bezug auf die Längsachse festgelegt wird.

In einer bevorzugten Ausführungsform weist die Ultraschallschwingeinheit einen Außenwulst mit mindestens einer Ausnehmung auf, wobei die Winkelpositionierungsvorrichtung mindestens einen zu der Ausnehmung korrespondierenden Vorsprung aufweist, der in die Ausnehmung eingreifen kann und somit die formschlüssige Verbindung verwirklicht.

Dabei kann der Außenwulst mehrere Ausnehmungen aufweisen, wobei vorzugsweise die Winkelpositionierungsvorrichtung mehrere zu den mehreren Ausnehmungen korrespondierende Vorsprünge aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

Insbesondere dann, wenn die Sonotrode als Wendesonotrode mit mehreren Siegelflächen ausgebildet ist, ist letztere Ausführungsform von Vorteil. In jeder Position, in welcher die formschlüssige Verbindung eine Relativdrehung zwischen Winkelpositionierungsvorrichtung und Ultraschallschwingeinheit verhindert, ist die Ultraschallschwingeinheit in einer Drehposition, in welcher eine der mehreren Siegelflächen optimal ausgerichtet ist.

Der Außenwulst kann beliebig ausgebildet sein. Beispielsweise kann der Außenwulst einen T-förmigen Querschnitt aufweisen. Der Außenwulst weist dann einen Steg und einen sich beidseitig im rechten Winkel von einer Seite des Stegs erstreckenden Flansch auf. Die Ausnehmung oder die Ausnehmungen können dann vorzugsweise im Flansch vorgesehen sein.

Der zumindest eine Vorsprung der Winkelpositionierungsvorrichtung kann sich prinzipiell in jeder Richtung erstrecken, soweit er in der Lage ist, eine formschlüssige Verbindung mit der Ultraschallschwingeinheit bereitzustellen. In einer bevorzugten Ausführungsform erstreckt sich der Vorsprung der Winkelpositionierungsvorrichtung in axialer Richtung.

In einer weiteren bevorzugten Ausführungsform weisen die mindestens eine Ausnehmung des Au-ßenwulstes sowie der Vorsprung der Winkelpositionierungsvorrichtung zueinander korrespondierende Kontaktflächen auf, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung und/oder des Vorsprungs gegenüber der Längsachse geneigt sind. Im Grunde genommen stellt diese Ausführungsform eine Verzahnung zwischen Winkelpositionierungsvorrichtung einerseits und Ultraschallschwingeinheit andererseits dar.

Um die formschlüssige Verbindung möglichst spielfrei zu gestalten ist in einer bevorzugten Ausführungsform vorgesehen, dass die Vorsprünge und oder Ausnehmungen spitz zulaufend ausgebildet sind mit der Folge, dass die Kontaktflächen gegenüber der Längsachse geneigt sind. Beispielsweise können die Vorsprünge und Ausnehmungen als Hirth-Verzahnung ausgeführt sein.

In einer weiteren bevorzugten Ausführungsform weist die Winkelpositionierungsvorrichtung ein Befestigungselement zum Befestigen der Winkelpositionierungsvorrichtung an einem Maschinenständer und ein Kopplungselement auf, welches in Richtung der Längsachse relativ zum Befestigungselement zwischen zwei Positionen hin und her bewegbar ist, wobei die formschlüssige Verbindung zwischen Kopplungselement und Ultraschallschwingeinheit hergestellt werden kann. Dabei kann das Kopplungselement in eine der Positionen elastisch vorgespannt sein.

Durch die Zweiteiligkeit der Winkelpositionierungsvorrichtung kann das Kopplungselement mit der Ultraschallschwingeinheit eine formschlüssige Verbindung eingehen oder außer Eingriff bewegt werden, um ein Drehen der Ultraschallschwingeinheit um ihre Längsachse zu ermöglichen.

In einer weiteren bevorzugten Ausführungsform ist zwischen Befestigungselement und Kopplungselement eine Druckplatte vorgesehen, wobei das Kopplungselement um die Längsachse relativ zur Druckplatte drehbar ist. Des Weiteren ist eine Arretiervorrichtung vorgesehen, mit welcher das Kopplungselement derart arretiert werden kann, dass eine Drehung des Kopplungselementes um die Längsachse der Ultraschallschwingeinheit verhindert wird. In einer bevorzugten Ausführungsform ist die Arretiervorrichtung an der Halterung befestigt.

Es kann eine Feinjustierungsvorrichtung vorgesehen sein, mit welcher das Kopplungselement relativ zum Befestigungselement um die Längsachse zwischen zwei Drehpositionen hin und her gedreht werden kann, wobei besonders bevorzugt die Feinjustiervorrichtung aus einem mit dem Kopplungselement verbindbaren Justierelement mit Langloch sowie einer durch das Langloch greifenden Schraube besteht, welche in eine Gewindebohrung der Halterung greift.

Die Drehbarkeit des Kopplungselementes relativ zum Befestigungselement dient dazu, eventuell noch bestehende Abweichungen von der Parallelität der Siegelfläche der Sonotrode und der Siegelfläche des Amboss auszugleichen. Dies kann mit Hilfe der Feinjustiervorrichtung extrem genau erfolgen.

In einer weiteren bevorzugten Ausführungsform ist der Außenwulst an der Sonotrode oder an einem zwischen Sonotrode und Konverter angeordneten Amplitudentransformator angeordnet, wobei vorzugsweise der Wulst in einem Schwingungsknoten der Resonanzschwingung mit der Wellenlänge λ/2 angeordnet ist. Die Anordnung im Schwingungsknoten stellt sicher, dass die Beeinflussung der Resonanzschwingung durch die Halterung bzw. die Winkelpositionierungsvorrichtung minimal ist. Ist der Außenwulst mit T-förmigem Querschnitt mit einem Steg und einem sich beidseitig im rechten Winkel von einer Seite des Stegs erstreckenden Flansch ausgebildet, so sollte dann der Steg im Schwingungsknoten der Resonanzschwingung angeordnet sein.

In einer weiteren bevorzugten Ausführungsform ist zwischen Sonotrode und Konverter ein Amplitudentransformator vorgesehen, wobei der Amplitudentransformator mit dem Konverter und/oder der Sonotrode über eine formschlüssige Verbindung verbunden sind, die einen Formschluss in allen Richtungen der zur Längsachse senkrechten Ebenen bereitstellt. Beispielsweise kann die formschlüssige Verbindung zwischen Amplitudentransformator und Konverter oder zwischen Amplitudentransformator und Sonotrode aus einem Zapfen und einer korrespondierenden Aussparung bestehen, wobei vorzugsweise der Zapfen an dem Amplitudentransformator und die korrespondierende Aussparung an der Sonotrode oder dem Konverter angeordnet sind.

Der Zapfen und die korrespondierende Aussparung sind vorzugsweise nicht rotationssymmetrisch zur Längsachse ausgebildet, sodass eine Drehpositionierung der Sonotrode gegenüber dem Amplitudentransformator oder dem Konverter gegenüber dem Amplitudentransformator durch die formschlüssige Verbindung erfolgt. Alternativ können auch mehrere Zapfen und hierzu korrespondierende Aussparungen vorgesehen sein. Dabei sollte der Zapfen oder die Zapfen derart ausgebildet sein, dass der Amplitudentransformator nur in definierten Drehwinkelpositionen mit der Sonotrode oder dem Konverter in Eingriff gebracht werden kann.

Dabei haben in einer besonders bevorzugten Ausführungsform der Zapfen und die korrespondierende Aussparung eine Drehsymmetrie um die Längsachse mit einer n-zähligen Drehachse. Ist die Sonotrode als Wendesonotrode drehsymmetrisch um die Längsachse mit einer m-zähligen Drehachse ausgebildet, so ist vorzugsweise m = n. Mit anderen Worten kann der Amplitudentransformator nur in n definierten Drehwinkelpositionen mit der Sonotrode oder dem Konverter in Eingriff gebracht werden.

Diese formschlüssige Verbindung erlaubt in der Regel eine axiale Bewegbarkeit zwischen Amplitudentransformator einerseits und Sonotrode oder Konverter andererseits. Um die Elemente fest miteinander zu verbinden, kann beispielsweise der Amplitudentransformator eine Gewindebohrung und die Sonotrode oder der Konverter eine Durchgangsstufenbohrung aufweisen, so dass mit einer die Durchgangsbohrung durchgreifenden Schraube, welche in die Gewindebohrung eingreift, eine axiale Befestigung erfolgen kann.

Alternativ könnte die Aussparung auch auf den Zapfen aufgeschrumpft werden.

In einer weiteren bevorzugten Ausführungsform ist vorgesehen, dass Zapfen und korrespondierende Aussparung konusförmig ausgebildet sind oder einen konusförmigen Abschnitt aufweisen. Die Konusform dient einerseits zum Zentrieren der Verbindung zwischen Sonotrode und Amplitudentransformator oder der Verbindung zwischen Amplitudentransformator und Konverter. Andererseits kann die Verbindung über die Konusform selbsthemmend ausgeführt sein. Daher ist eine Konuswinkel von maximal 2° von Vorteil.

Nach einer weiteren bevorzugten Ausführungsform ist eine Halterung mit einer Klemmvorrichtung vorgesehen, welche zwischen einer geöffneten Position und einer geschlossenen Position hin und her bewegt werden kann. Dabei kann die Ultraschallschwingeinheit in der geöffneten Position aus der Halterung entnommen werden. In der geschlossenen Position tritt die Klemmvorrichtung an zumindest zwei Haltepunkten mit der Ultraschallschwingeinheit in Kontakt und übt eine Kraft auf diese aus, sodass die Ultraschallschwingeinheit gehalten wird.

Dabei sind die Haltepunkte vorzugsweise auf dem Außenwulst angeordnet.

In einer besonders bevorzugten Ausführungsform ist die Klemmvorrichtung als Spannhülse mit Schlitz ausgebildet. Dabei hat die Spannhülse eine Innenfläche, die korrespondierend zu der Außenfläche eines Abschnittes der Ultraschallschwingeinheit ausgebildet ist. Der Schlitz verbindet die Außenfläche der Hülse mit der Innenfläche der Hülse, so dass die Hülse zwei gegenüberliegende Schlitzwände aufweist, die den Schlitz begrenzen. Eine Spannvorrichtung ist vorgesehen, mit welcher die Schlitzwände aufeinander zu bewegt werden können, wodurch der von der Innenfläche umgrenzte Raum reduziert und die Ultraschallschwingeinheit innerhalb der Hülse geklemmt wird.

Beispielsweise kann in eine Schlitzwand eine Gewindebohrung und in die andere Schlitzwand eine Durchgangsstufenbohrung eingebracht werden, so dass eine als Spannvorrichtung dienende Schraube durch die Durchgangsstufenbohrung in die Gewindebohrung eingreifen kann und beim Drehen der Schraube die beiden Schlitzwände aufeinander zubewegt werden können.

Um eine Beschädigung der Ultraschallschwingeinheit durch die Klemmvorrichtung zu verhindern ist in einer bevorzugten Ausführungsform vorgesehen, dass die Schlitzwände als Anschlagsflächen dienen. Daher sind ein Abschnitt der Außenfläche der Ultraschallschwingeinheit und die Innenfläche der Spannhülse derart aufeinander abgestimmt, dass dann, wenn die Schlitzwände sich berühren, die Ultraschallschwingeinheit sicher von der Klemmvorrichtung gehalten, ohne dass es zu einer Beschädigung der Ultraschallschwingeinheit kommt.

Weitere Vorteile, Merkmale und Anwendungsmöglichkeiten werden deutlich anhand der folgenden Beschreibung einer bevorzugten Ausführungsform der Erfindung und der zugehörigen Figuren. Es zeigen:
Figur 1 eine Draufsicht auf eine erfindungsgemäße Ultraschallschweißanlage,
Figur 2 eine perspektivische Ansicht auf die Ultraschallschweißanlage gemäß Figur 1 ohne Halter,
Figur 3 eine perspektivische Ansicht auf den Halter von Figur 1 ohne Schwinggebilde,
Figuren 4a, 4b, 4c eine perspektivische Ansicht des Kopplungselementes, des Winkelpositionierelementes von Figur 1 sowie eine Schnittansicht des Winkelpositionierungselementes und der Halterung,
Figur 5 eine Schnittansicht durch die Ausführungsform von Figur 1,
Figur 6 eine perspektivische Ansicht auf den Amplitudentransformator von Figur 1 und
Figur 7 eine perspektivische Ansicht auf die Sonotrode von Figur 1.

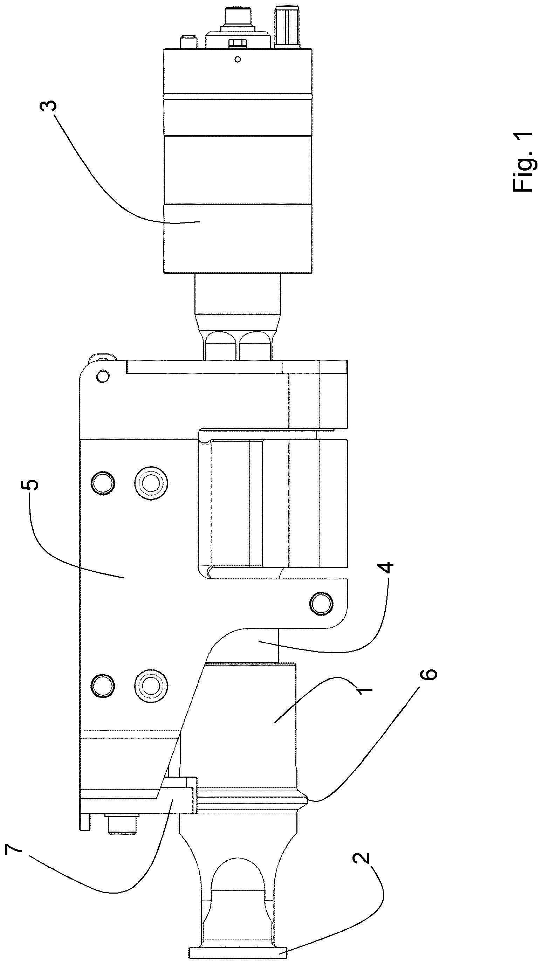

In Figur 1 ist eine erste Ausführungsform der erfindungsgemäßen Ultraschallschweißanlage gezeigt. Diese Ultraschallschweißanlage ist speziell für das Schweißen von Metall vorgesehen. Sie weist eine Ultraschallschwingeinheit auf, die eine Sonotrode 1, ein Amplitudentransformator 4 und einen Konverter 3 beinhaltet. Die Elemente der Ultraschallschwingeinheit sind entlang einer Längsachse nebeneinander angeordnet. Mit Hilfe des Konverters 3 wird eine elektrische Wechselspannung in eine mechanische Ultraschallschwingung umgewandelt. Diese mechanische Schwingung wird mit Hilfe des Amplitudentransformators 4 in ihrer Amplitude, nicht jedoch in ihrer Frequenz, verändert und auf die Sonotrode 1 übertragen. Auf der dem Konverter 3 gegenüberliegenden Seite der Sonotrode 1 weist diese insgesamt vier Siegelflächen 2 auf, die dafür vorgesehen sind, mit dem zu bearbeitenden Material in Kontakt zu treten. Die Ultraschallschwingeinheit ist mit ihren Einzelelementen, d.h. dem Konverter 3, dem Amplitudentransformator 4 und der Sonotrode 1 derart aufeinander abgestimmt, dass sie mit einer Ultraschallfrequenz der Wellenlänge in Resonanz versetzt werden kann. Innerhalb der Sonotrode bildet sich dann eine stehende Longitudinalhalbwelle aus. Die Ultraschallschwingeinheit muss in einem Maschinenständer gehalten werden. Dafür ist der Halter 5 vorgesehen, der weiter unten im Detail erläutert wird.

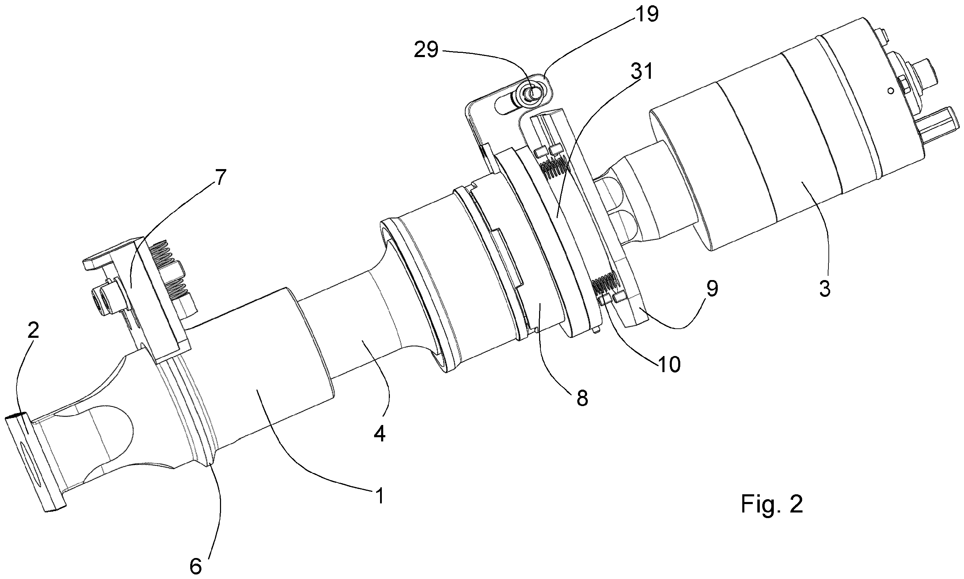

Figur 2 zeigt eine perspektivische Ansicht der Ausführungsform von Figur 1. Man erkennt hier, dass die Einzelteile der Ultraschallschwingeinheit, nämlich der Konverter 3, der Amplitudentransformator 4 und die Sonotrode 1 im Wesentlichen rotationssymmetrisch sind, wobei lediglich das dem Konverter 3 abgewandte Ende der Sonotrode 1 quadratisch ausgebildet ist und an jeder Kantenfläche des quadratischen Querschnittes eine Schweißfläche 2 vorgesehen ist. Alternativ könnte die Sonotrode auch andere Querschnitte, wie z.B. dreieckig, rechteckig aber nicht quadratisch, usw. aufweisen.

Insbesondere beim Schweißen von Metallen und zwar insbesondere von Nichteisenmetallen, wie z.B. Kupfer oder Aluminium, mittels Ultraschall kommt es zu einer erheblichen Abnutzung der Schweißfläche, sodass die Ultraschallschweißanlage teilweise oder vollständig in regelmäßigen Abständen ausgetauscht werden muss.

Da die gezeigte Sonotrode 1 insgesamt vier Siegelflächen 2 aufweist, kann sie, wenn eine Siegelfläche 2 verschlissen ist, um 90° gedreht und in dieser Position weiter verwendet werden.

Zum Bearbeiten von Metall mittels Ultraschall wird das zu bearbeitende Material zwischen der Siegelfläche 2 der Sonotrode 1 und einem Gegenwerkzeug (nicht gezeigt) angeordnet und dann die Ultraschallschwingeinheit in Schwingung versetzt, sodass über die Siegelflächen 2 eine Ultraschallschwingung in das zu bearbeitende Material übertragen werden kann.

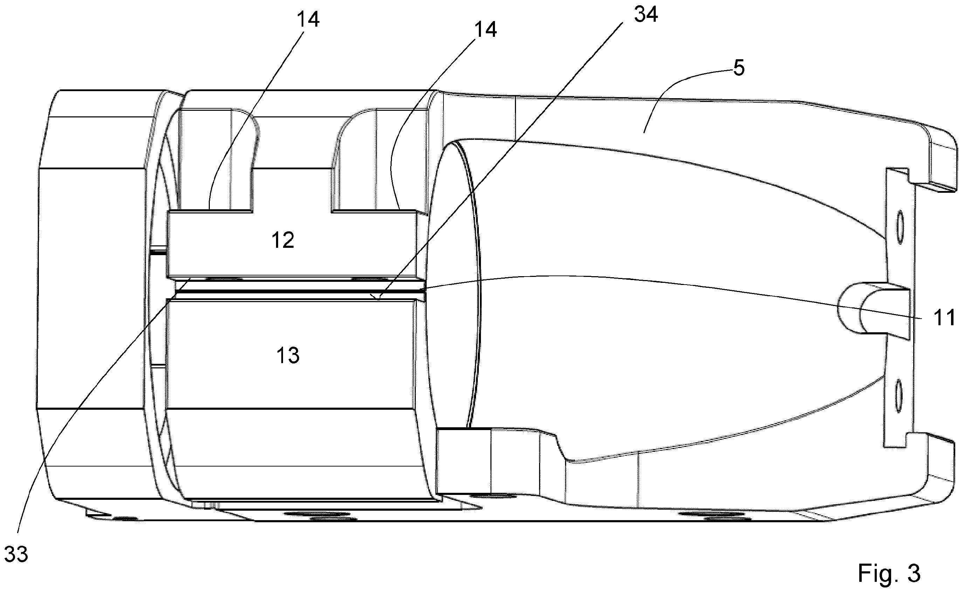

Die Halterung 5 von Figur 1 ist in Figur 3 separat dargestellt. Sie ist als Spannhülse ausgebildet. Es ist zu erkennen, dass die Halterung den Amplitudentransformator vollständig umschließt. Sie weist allerdings einen Schlitz 11 auf, der durch zwei Schenkelelemente 12, 13 der Halterung gebildet wird. In der in Figur 3 gezeigten Position kann den Amplitudentransformator 4 axial in die Halterung 5 geschoben werden. In dieser Position kann der Amplitudentransformator 4 und damit die gesamte Ultraschallschwingeinheit innerhalb der Halterung 5 um seine Längsachse gedreht werden. Sobald die gewünschte Position der Ultraschallschwingeinheit bzw. der Siegelflächen 2 der Sonotrode 1 erreicht ist, können die beiden Schenkelelemente 12, 13 mit Hilfe von Schrauben, die in den Bohrungen 14, die innerhalb des Schenkelelementes 13 als Gewindebohrung und innerhalb des Schenkelelementes 12 als Durchgangsbohrung ausgebildet sind, aufgenommen sind, aufeinander zubewegt werden, sodass der Innendurchmesser der hülsenartigen Halterung 5 verringert wird und der Amplitudentransformator 4 in der Halterung 5 festgeklemmt wird und dann keine Relativdrehung der Ultraschallschwingeinheit um ihre Längsachse gegenüber der Halterung 5 mehr möglich ist. Dabei ist zu beachten, dass in dem geöffneten Zustand der Halterung die Bohrung nur minimal größer sein sollte als der Außendurchmesser des zu spannenden Amplitudentransformators. Dieses Übermaß sollte kleiner als 0,1mm vorzugsweise kleiner als 0,05 mm und am besten kleiner als 0,02mm sein. Bei der gezeigten Ausführungsform weisen die Schenkelelemente 12,13 korrespondierende Schlitzwände, die als Anschlagsflächen dienen, auf. Dies bedeutet, dass der Abschnitt der Außenfläche der Ultraschallschwingeinheit und die Innenfläche der Spannhülse derart ausgebildet sind, dass mithilfe von Schrauben, die in die Bohrungen 14 eingreifen, die Schenkelelemente 12,13 soweit aufeinander zu bewegt werden können bis die Anschlagsflächen sich berühren und in dieser Situation die Ultraschallschwingeinheit fest innerhalb der Spannhülse gehalten wird. Durch diese Konfiguration wird sichergestellt, dass die Spannhülse nicht einen zu großen Druck auf die empfindliche Ultraschallschwingeinheit ausüben kann. Es kann daher keine größere Kraft auf die Ultraschallschwingeinheit ausgeübt werden als diejenige, die die Hülse in dem Moment auf die Ultraschallschwingeinheit aufbringt, in dem die beiden Schlitzwände der Schenkelelemente 12,13 aufeinandertreffen.

Bevorzugt ist die Spannhülse derart ausgebildet, dass bei in der Spannhülse aufgenommener Ultraschallschwingeinheit ein Drehmoment von mindestens 100 Nm, vorzugsweise von mindestens 200 Nm und am besten von mindestens 300 Nm auf die Ultraschallschwingeinheit aufgebracht werden kann, ohne dass die Ultraschallschwingeinheit innerhalb der Spannhülse sich relativ zu Spannhülse um die Längsachse dreht. Dadurch ist sichergestellt, dass einzelne Bauteile, wie z.B. die Sonotrode von der Ultraschallschwingeinheit abmontiert werden können, während diese in der Halterung gehalten wird.

Andererseits sollte die Klemmkraft, die die Halterung auf den Amplitudentransformator ausübt, so klein wie möglich sein, um die Auswirkungen der Klemmung auf den Amplitudentransformator möglichst gering zu halten. Daher sollte die Spannhülse derart ausgebildet sein, dass, wenn ein Drehmoment von mehr als 2000 Nm, vorzugsweise von mehr als 1 000Nm und am besten von mehr als 500 Nm auf die Ultraschallschwingeinheit aufgebracht wird, sich die Ultraschallschwingung innerhalb der Halterung relativ zu dieser um die Längsachse dreht. Dadurch ist sichergestellt, dass die von der Halterung auf den Amplitudentransformator aufgebrachte Kraft die Schwingung kaum beeinflusst.

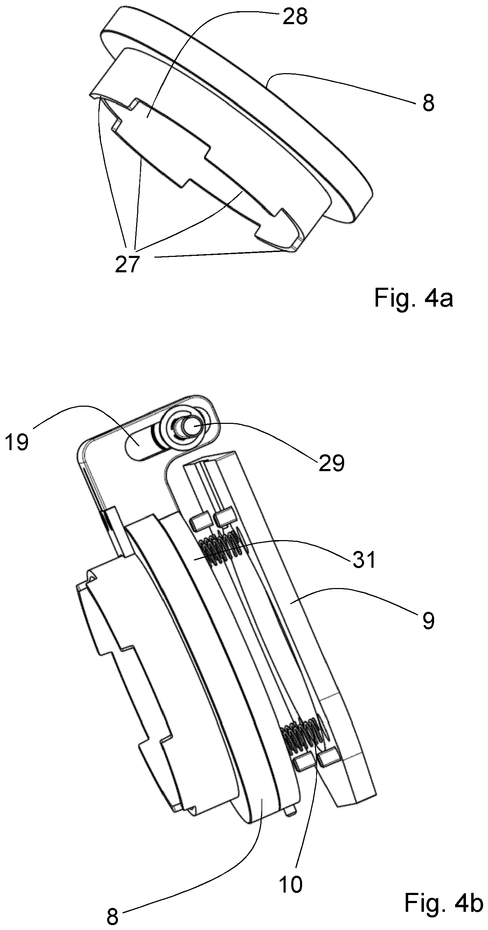

In Figur 4a ist eine perspektivische Ansicht des Kopplungselementes 8 der Winkelpositionierungseinrichtung gezeigt. Die Winkelpositionierungseinrichtung dient dazu, die Winkelposition der Siegelflächen 2 der Sonotrode 1 auf einfache Weise möglichst genau einzustellen.

Die Winkelpositionierungsvorrichtung weist das Kopplungselement 8 auf, das als Hülse ausgebildet ist. An seiner dem Konverter abgewandten Seite sind eine Reihe von Vorsprüngen 27 bzw. Ausnehmungen 28 angeordnet. Dabei ist der Außendurchmesser des Konvertergehäuses kleiner als der Innendurchmesser des Kopplungselements ausgebildet, so dass die Ultraschallschwingeinheit einschließlich Konverter durch das Kopplungselement geschoben werden kann bis die Ausnehmungen und Vorsprünge ineinandergreifen.

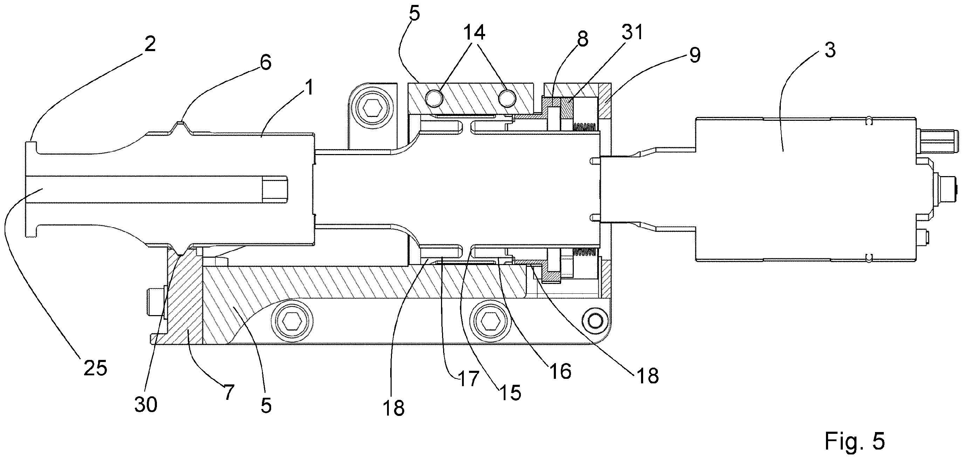

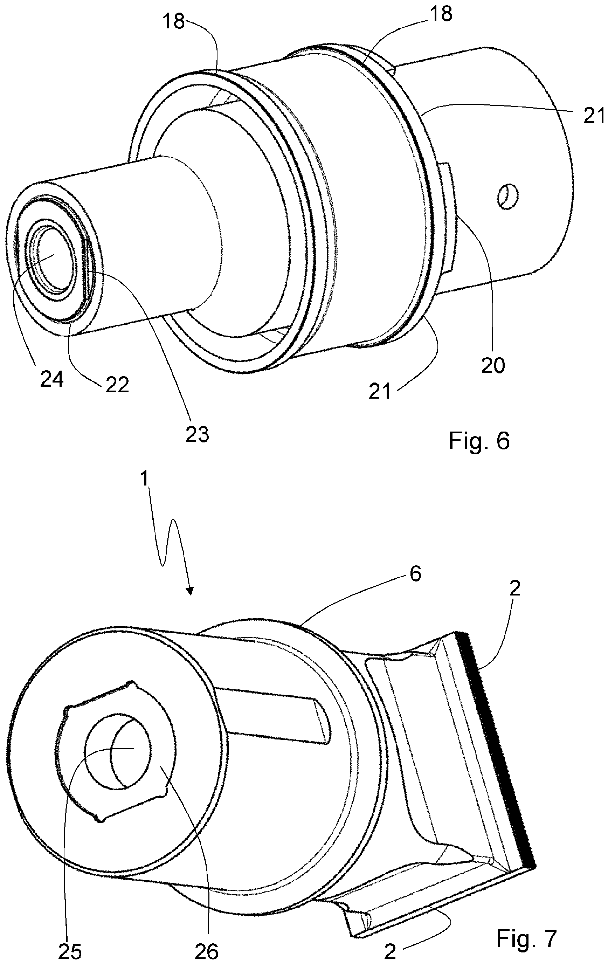

Wie man insbesondere in Figur 5 erkennen kann, weist der Amplitudentransformator einen Außenwulst auf, der hier durch einen Steg 15 und einen Flansch mit einem ersten und einem zweiten Hülsenabschnitt 16, 17 gebildet wird. Der Steg 15 ist an einem Schwingungsknoten mit dem Amplitudentransformator 4 verbunden. Von dem Amplitudentransformator 4 erstreckt sich am Ende des Steges 15 der erste Hülsenabschnitt 16 in Richtung des Konverters 3 und der zweite Hülsenabschnitt 17 in Richtung der Sonotrode 1. Sowohl der erste Hülsenabschnitt 16 als auch der zweite Hülsenabschnitt 17 haben einen umlaufenden Bund 18, die als Kontaktflächen für die Halterung 5 dienen. Diese Art der Befestigung erlaubt eine Halterung ohne dass es zu einer nennenswerten Beeinflussung des Schwingungsverhaltens der Ultraschallschwingeinheit kommt. In Figur 6 ist eine perspektivische Darstellung des Amplitudentransformators 4 dargestellt. Man erkennt die beiden umlaufenden Bunde 18. Der erste Hülsenabschnitt 16 weist eine Reihe von Vorsprüngen 20 bzw. Ausnehmungen 21 auf, die korrespondierend zu den Vorsprüngen 27 und den Ausnehmungen 28 der Winkelpositionierungsvorrichtung ausgebildet sind. Die Vorsprünge 27 und die Ausnehmungen 28 der Winkelpositionierungsvorrichtung können somit mit den Ausnehmungen 21 und den Vorsprüngen 20 verbunden werden. Durch diese formschlüssige Verbindung wird eine Drehung der Ultraschallschwingeinheit um die Längsachse verhindert, während einer Relativbewegung zwischen der Ultraschallschwingeinheit und der Winkelpositioniervorrichtung in Richtung der Längsachse nicht verhindert wird. Dabei ist der Außendurchmesser des umlaufenden Bundes etwas kleiner als der Innendurchmesser der Halterung.

In Figur 4b ist die gesamte Drehpositionierungsvorrichtung dargestellt. Das bereits in Figur 4a gezeigte Kopplungselement 8 liegt an einer Druckplatte 31 an, welche wiederum mittels der Federn 10 federnd an dem Befestigungselement 9 angeordnet ist. Das Befestigungselement 9 ist stationär angeordnet. Aufgrund der Federn 10 kann die Druckplatte 31 in axialer Richtung relativ zum Befestigungselement 9 bewegt werden. Da das Kopplungselement 8 an der Druckplatte 31 anliegt, bewegt sich das Kopplungselement in axialer Richtung zusammen mit der Druckplatte 31. Das Kopplungselement 8 kann relativ zur Druckplatte 31 um die Längsachse zwischen zwei Positionen hin und her gedreht werden, wie weiter unten beschrieben wird.

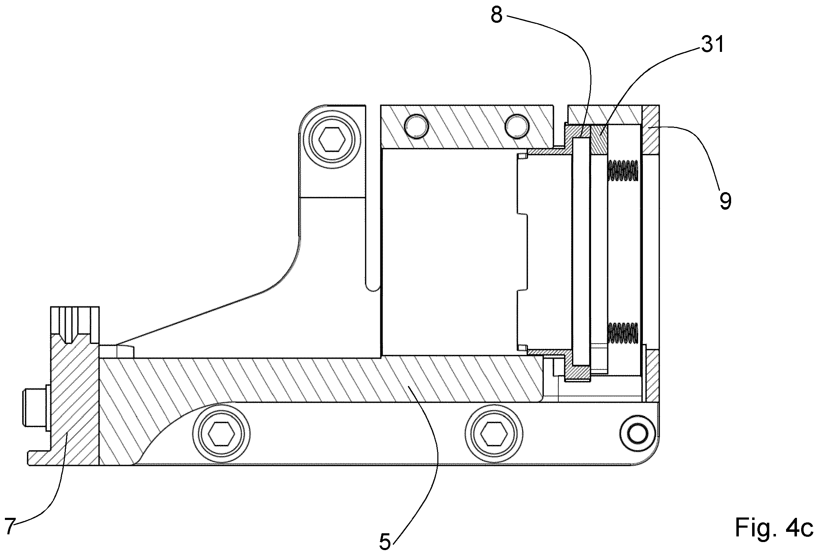

Figur 4c ist eine Schnittansicht des Halters 5 zusammen mit der Drehpositionierungsvorrichtung gezeigt.

Wie auch in Figur 2 gezeigt ist, drücken Federelemente 10 das Kopplungselement 8 nach vorne, d.h. in Richtung der Sonotrode 1, und damit in Eingriff mit den Vorsprüngen 20 und Ausnehmungen 21 des Amplitudentransformators 4.

So lange die Halterung 5 noch nicht in ihrer geklemmten Position ist, kann die Ultraschallschwingeinheit um ihre Längsachse gedreht werden, in dem das Kopplungselement 8 mithilfe der Ultraschallschwingeinheit entgegen der Kraft der Federn 10 nach hinten, d.h. in Richtung des Konverters 3 gedrückt wird. Die Ultraschallschwingeinheit wird dann so lange um ihre Längsachse gedreht bis die Vorsprünge 20 in den Ausnehmungen 28 zu liegen kommen. Das Kopplungselement 8 rastet somit in den Flansch des Amplitudentransformators 4 ein.

In der gezeigten Ausführungsform entspricht die Zahl der Vorsprünge 20 bzw. 27 und die Zahl der Ausnehmungen 21 bzw. 28 der Anzahl von Siegelflächen 2 an der Sonotrode 1. Es ist daher sichergestellt, dass die Ultraschallschwingeinheit nur in ausgewählten Winkelpositionen montiert werden kann.

Bei der gezeigten Ausführungsform ist zusätzlich eine kleine Relativdrehung des Kopplungselementes 8 gegenüber dem Befestigungselement 9 um die Längsachse möglich. Um eine solche geringfügige Drehung zu bewerkstelligen ist ein als Öse 19 ausgebildetes Justierelement vorgesehen, das lösbar mit dem Kopplungselement 8 verbunden ist. Eine als Schraube ausgebildete Feinjustiervorrichtung 29 verbindet die das Justierelement mit der Halterung 5. Durch Drehen der Schraube 29 kann somit in einem gewissen Umfang das mit dem Justierelement verbundene Kopplungselement 8 gegenüber der Halterung 5 und dem Befestigungselement 9 verdreht werden, um eine Feinjustierung der Winkelposition vorzunehmen. Daher hat die Schraube 29 innerhalb des in der Öse 19 vorgesehenen Langlochs sowohl in axialer Richtung als auch in radialer Richtung etwas Spiel.

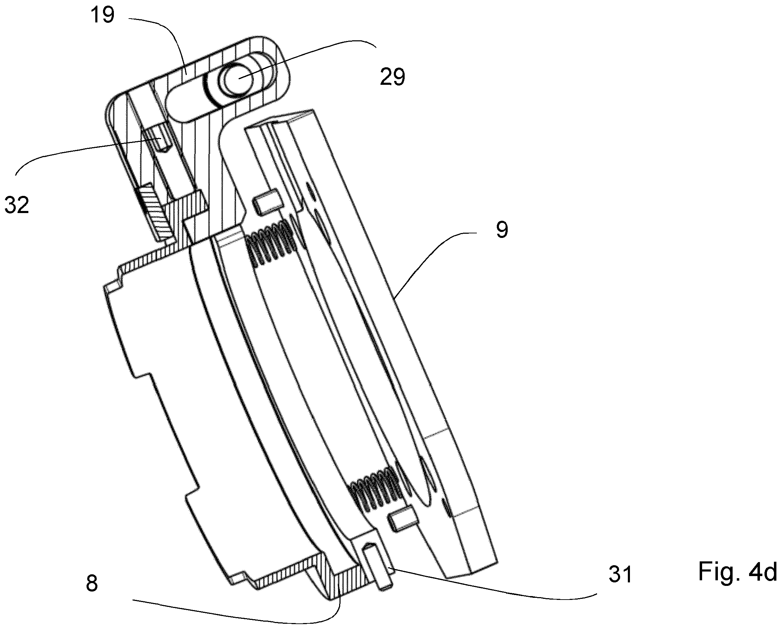

In Figur 4d ist eine weitere perspektivische Schnittansicht durch die Winkelpositionierungsvorrichtung gezeigt. In der Öse 19 ist eine Gewindebohrung eingebracht, in welche eine Madenschraube 32 eingreift. Mithilfe der Madenschraube 32 kann die Öse 19 mit dem Kopplungselement 8 verklemmt werden, sodass Kopplungselement 8 und Öse 19 nur gemeinsam um die Längsachse gedreht werden können.

Bei der erstmaligen Justierung einer Ultraschallschwingeinheit innerhalb der Halterung oder wenn die Winkelposition der Siegelflächen zwei gegenüber den Vorsprüngen 20 und Ausnehmungen 21 nicht bekannt ist, kann somit die Madenschraube 32 gelöst werden, die Ultraschallschwingeinheit in die Halterung eingesetzt werden, sodass das Kopplungselement 8 entgegen der Kraft der Federn 10 in Richtung des Befestigungselementes 9 gedrückt wird, dann um ihre Längsachse gedreht werden, bis die Vorsprünge 20 und Ausnehmungen 21 der Ultraschallschwingeinheit in den korrespondierenden Vorsprüngen 27 und Ausnehmungen 28 des Kopplungselement des 8 zu liegen kommen. In dieser Position wird das Kopplungselement 8 aufgrund der Kraft der Federn 10 wieder von dem Befestigungselement 9 weggedrückt. Nun kann die Ultraschallschwingeinheit um ihre Längsachse gedreht werden, bis die Siegelflächen 2 in etwa in der gewünschten Drehposition sind. Da die Madenschraube 32 gelöst ist, dreht sich das Kopplungselement 8 mit der Ultraschallschwingeinheit mit, während die Druckplatte 31 an Ihrer Position verbleibt.

Sobald die gewünschte Drehposition der Ultraschallschwingeinheit in etwa erreicht ist, kann die Madenschraube 32 festgedreht werden, um die Öse 19 mit dem Kopplungselement 8 zu verbinden. Eine weitere Drehung der Ultraschallschwingeinheit um ihre Längsachse ist nun nur noch sehr begrenzt durch Drehen der Schraube 29 möglich.

Wie in Figur 6 zu sehen ist weist der Amplitudentransformator 4 an seiner der Sonotrode 1 zugewandten Seite einen Zapfen 22 auf. In der Figur 7 ist eine perspektivische Ansicht der Sonotrode 1 gezeigt. Die Sonotrode 1 weist an ihrer dem Amplitudentransformator 4 zugewandten Seite eine zu dem Zapfen 22 korrespondierende Aussparung 26 auf. Der Zapfen 22 weist Ausschnitte 23 auf, die in der korrespondierenden Aussparung 26 ebenfalls zu erkennen sind. Wird der Zapfen 22 in die Aussparung 26 eingesetzt, so entsteht eine formschlüssige Verbindung zwischen Sonotrode 1 und Amplitudentransformator 4 in einer Drehrichtung um die Längsachse.

Die Sonotrode 1 weist eine als Stufenbohrung ausgebildete Zentralbohrung 25 auf, durch die eine Schraube in eine korrespondierende Zentralgewindebohrung 24 des Amplitudentransformators geführt werden kann, um die Sonotrode 1 an dem Amplitudentransformator 4 zu befestigen.

Wie in der Schnittansicht von Figur 5 zu erkennen ist, weist die Sonotrode 1 eine Außenrippe 6 auf, die in einem Schwingungsknoten der Resonanzfrequenz der Sonotrode 1 angeordnet ist. Die Außenrippe ist in der gezeigten Ausführungsform umlaufend ausgebildet. An der Halterung 5 ist ein Abstützelement befestigt, welches in radialer Richtung zwischen einer äußeren Position, in welcher die Ultraschallschwingeinheit in der Halterung aufgenommen werden kann, und einer inneren Position, in welcher das Abstützelement eine Bewegung der Ultraschallschwingeinheit in Richtung der Längsachse verhindert. In dieser Position kann das Abstützelement arretiert werden, um eine unerwünschte Bewegung des Abstützelementes 7 in Richtung der äußeren Position zu verhindern. Das Abstützelement 7 weist eine Nut 30 auf, in welcher die Außenrippe 6 zu liegen kommt. Wird nun wie in Figur 5 von oben durch das zu bearbeitende Material auf die Sonotrode eine Kraft ausgeübt, so wird diese Kraft von dem Abstützelement 7 aufgenommen. Die vorgesehene umschließende Halterung 5 an dem Amplitudentransformator 4 ist von dem Bearbeitungsort, d.h. den Siegelflächen 4 relativ weit entfernt, sodass bereits kleine Schweißkräfte auf die Siegelfläche 2 zu einem Verbiegen der Ultraschallschwingeinrichtung führen würden. Daher ist die Abstützvorrichtung 7 vorgesehen.

Um die Ultraschallschwingeinheit in der Halterung aufzunehmen, muss zunächst die Klemmung mittels der Schrauben in den Bohrungen 14 gelöst werden. Zudem muss das Abstützelement 7 radial nach außen verschoben werden. Nun kann die Ultraschallschwingeinheit in die Halterung 5 eingesetzt werden. Dabei wird das Kopplungselement 8 sowie die Druckplatte 31 gegen die Federkraft der Federn 10 in Richtung des Befestigungselements 9 gedrückt bis die Außenrippe 6 in der Nut 30 des Abstützelementes 7, nachdem dieses radial nach innen bewegt und arretiert worden ist, zu liegen kommt. Damit ist die axiale Position der Ultraschallschwingeinheit festgelegt. Die Winkelpositionierung erfolgt dann dadurch, dass die Ultraschallschwingeinrichtung so lange um ihre Längsachse gedreht wird bis die Vorsprünge vom Kopplungselement 8 in die entsprechenden Ausnehmungen am ersten Hülsenabschnitt 16 einrasten. In dieser Position ist dann auch die Winkelposition nahezu perfekt ausgerichtet. Die Feinabstimmung erfolgt mit Hilfe der Feinjustiervorrichtung, d.h. der Öse 19 und der Schrauben 29, mit deren Hilfe eine Feinjustierung der Winkelposition erfolgen kann.

Sobald die korrekte Position der Ultraschallschwingeinheit erreicht ist, können mit Hilfe der Befestigungsschrauben, die in die Bohrungen 14 eingreifen, die Schenkelelemente 12 und 13 aufeinander zubewegt werden, um den Schlitz 11 zu verkleinern und die Ultraschallschwingeinheit in der Haltehülse umschließend zu klemmen.

### Bezugszeichen

- 1: Sonotrode
- 2: Siegelfläche
- 3: Konverter
- 4: Amplitudentransformator
- 5: Halterung
- 6: Außenrippe
- 7: Abstützelement
- 8: Kopplungselement
- 9: Befestigungselement
- 10: Federn
- 11: Schlitz
- 12: Schenkelelement
- 13: Schenkelelement
- 14: Bohrung
- 15: Steg
- 16: erster Hülsenabschnitt
- 17: zweiter Hülsenabschnitt
- 18: Bund
- 19: Öse
- 20: Vorsprung
- 21: Ausnehmung
- 22: Zapfen
- 23: Ausschnitt
- 24: Zentralbohrung
- 25: Zentralbohrung
- 26: Aussparung
- 27: Vorsprung
- 28: Ausnehmung
- 29: Schraube
- 30: Nut
- 31: Druckplatte
- 32: Madenschraube
- 33: Schlitzwand
- 34: Schlitzwand

## Patentansprüche

1. Ultraschallschweißanlage mit einer Ultraschallschwingeinheit, die eine Sonotrode (1) und einen Konverter (3) aufweist, wobei die Sonotrode (1) und der Konverter (3) entlang einer Längsachse nebeneinander angeordnet sind und die Ultraschallschwingeinheit mit einer Ultraschallschwingung in Richtung der Längsachse mit einer Wellenlänge λ in Resonanz gebracht werden kann, wobei ein Abstützelement (7) zum Abstützen einer senkrecht zur Längsachse auf die Sonotrode (1) aufgebrachten Kraft vorgesehen ist, wobei Sonotrode (1) und Abstützelement (7) zueinander korrespondierende Abstützflächen aufweisen, die zumindest dann, wenn eine Kraft senkrecht zur Längsachse auf die Sonotrode (1) ausgeübt wird, miteinander in Kontakt treten, **dadurch gekennzeichnet, dass** die Abstützflächen derart ausgebildet sind, dass sie, wenn sie miteinander in Kontakt stehen eine Relativbewegung der Sonotrode (1) gegenüber dem Abstützelement (7) in Richtung der Längsachse verhindern und eine Drehung der Sonotrode (1) um die Längsachse nicht behindern.

2. Ultraschallschweißanlage nach Anspruch 1, **dadurch gekennzeichnet, dass** entweder die Sonotrode (1) eine Rippe (6) und das Abstützelement (7) eine Nut (30) hat oder die Sonotrode (1) eine Nut und das Abstützelement (7) eine Rippe hat, wobei Rippe (6) und Nut (30) die korrespondierenden Abstützflächen aufweisen, wobei vorzugsweise die Rippe (6) oder die Nut (30) der Sonotrode (1) in einem Schwingungsknoten der Resonanzschwingung mit der Wellenlänge λ angeordnet sind.

3. Ultraschallschweißanlage nach Anspruch 1 oder 2, **dadurch gekennzeichnet, dass** ein Gegenwerkzeug vorgesehen ist, wobei Sonotrode (1) und Gegenwerkzeug in einer Richtung senkrecht zur Längsachse relativ zueinander bewegbar sind und das Abstützelement (7) derart positioniert ist, dass eine von dem Gegenwerkzeug auf die Sonotrode (1) ausgeübte Kraft auf das Abstützelement (7) übertragen wird.

4. Ultraschallschweißanlage nach einem der Ansprüche 2 bis 3, **dadurch gekennzeichnet, dass** die Rippe (6) und die Nut (30) einen trapezförmigen Querschnitt aufweisen, wobei vorzugsweise Rippe (6) und Nut (30) jeweils zwei Abstützflächen aufweisen, die nicht parallel verlaufen und mit der Längsachse einen Winkel einschließen, der kleiner als 90° ist.

5. Ultraschallschweißanlage nach einem der Ansprüche 1 bis 4, **dadurch gekennzeichnet, dass** das Abstützelement (7) derart ausgebildet ist, dass es zwischen zwei Positionen senkrecht zur Längsachse hin und her bewegbar ist, wobei vorzugweise eine Verriegelungsvorrichtung vorgesehen ist, mit welcher das Abstützelement (7) in zumindest einer Position verriegelbar ist.

6. Ultraschallschweißanlage nach einem der Ansprüche 1 bis 5, **dadurch gekennzeichnet, dass** eine Halterung (5) zum Halten der Ultraschallschwingeinheit vorgesehen ist, wobei vorzugsweise das Abstützelement (7) an der Halterung (5) montiert ist.

7. Ultraschallschweißanlage nach Anspruch 6, **dadurch gekennzeichnet, dass** die Halterung (5) eine Winkelpositionierungsvorrichtung aufweist, wobei die Winkelpositionierungsvorrichtung und die Ultraschallschwingeinheit derart ausgebildet sind, dass sie formschlüssig miteinander verbindbar sind, so dass eine Drehung der Ultraschallschwingeinheit um die Längsachse durch die formschlüssige Verbindung verhindert wird und eine Relativbewegung zwischen der Ultraschallschwingeinheit und der Halterung (5) in Richtung der Längsachse nicht verhindert wird.

8. Ultraschallschweißanlage nach Anspruch 7, **dadurch gekennzeichnet, dass** die Ultraschallschwingeinheit einen Außenwulst (6) mit mindestens einer Ausnehmung (21) aufweist, wobei die Winkelpositionierungsvorrichtung mindestens einen zu der Ausnehmung (21) korrespondierenden Vorsprung (20) aufweist, der in die Ausnehmung (21) eingreifen kann und somit die formschlüssige Verbindung verwirklicht, wobei vorzugsweise der Außenwulst (6) mehrere Ausnehmungen (21) aufweist, wobei besonders bevorzugt die Winkelpositionierungsvorrichtung mehrere zu den mehreren Ausnehmungen (21) korrespondierende Vorsprünge (20) aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

9. Ultraschallschweißanlage nach Anspruch 8, **dadurch gekennzeichnet, dass** die mindestens eine Ausnehmung (21) des Außenwulstes (6) sowie der Vorsprung (20) der Winkelpositionierungsvorrichtung zueinander korrespondierende Kontaktflächen aufweisen, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung (21) und/oder des Vorsprungs (20) gegenüber der Längsachse geneigt sind.

10. Ultraschallschweißanlage nach einem der Ansprüche 7 bis 9, **dadurch gekennzeichnet, dass** die Winkelpositionierungsvorrichtung ein Befestigungselement (9) zum Befestigen der Winkelpositionierungsvorrichtung an einem Maschinenständer und ein Kopplungselement (8) aufweist, welches in Richtung der Längsachse relativ zum Befestigungselement (9) zwischen zwei Positionen hin und her bewegbar ist, wobei die formschlüssige Verbindung zwischen Kopplungselement (8) und Ultraschallschwingeinheit hergestellt werden kann, wobei vorzugsweise das Kopplungselement (8) in eine der Positionen elastisch vorgespannt ist, wobei besonders bevorzugt die Vorspannung mit Hilfe von zumindest einem Federelement (10) erfolgt.

11. Ultraschallschweißanlage nach einem der Ansprüche 8 bis 10, **dadurch gekennzeichnet, dass** der Außenwulst (6) an der Sonotrode (1) oder an einem zwischen Sonotrode (1) und Konverter (3) angeordneten Amplitudentransformator (4) angeordnet ist, wobei vorzugsweise der Wulst (6) in einem Schwingungsknoten der Resonanzschwingung mit der Wellenlänge λ angeordnet ist.

12. Ultraschallschweißanlage nach einem der Ansprüche 1-11, **dadurch gekennzeichnet, dass** ein zwischen Sonotrode (1) und Konverter (3) angeordneter Amplitudentransformator (4) vorgesehen ist, wobei der Amplitudentransformator (4) mit dem Konverter (3) und/oder der Sonotrode (1) über eine formschlüssige Verbindung, die einen Formschluss in allen Richtungen der zur Längsachse senkrechten Ebene bereitstellt, verbunden sind.

13. Ultraschallschweißanlage nach Anspruch 12, **dadurch gekennzeichnet, dass** die formschlüssige Verbindung zwischen Amplitudentransformator (4) und Konverter (3) oder zwischen Amplitudentransformator (4) und Sonotrode (1) aus einem Zapfen (22) und einer korrespondierenden Aussparung (26) besteht, wobei vorzugsweise der Zapfen (22) an dem Amplitudentransformator (4) und die korrespondierende Aussparung (26) an der Sonotrode (1) oder dem Konverter (3) angeordnet ist und/oder der Zapfen (22) und die korrespondierende Aussparung (26) nicht rotationssymmetrisch zur Längsachse ausgebildet sind, wobei vorzugsweise der Zapfen (22) und die korrespondierende Aussparung (26) drehsymmetrisch um die Längsachse mit einer n-zähligen Drehachse ausgebildet sind, wobei n eine natürliche Zahl größer eins ist, wobei besonders bevorzugt die Sonotrode (1) drehsymmetrisch um die Längsachse mit einer m-zähligen Drehachse ausgebildet ist und m gleich n ist.

14. Ultraschallschweißanlage nach Anspruch 13, **dadurch gekennzeichnet, dass** der Zapfen (22) und die korrespondierende Aussparung (26) konusförmig ausgebildet sind oder einen konusförmigen Abschnitt aufweisen.

15. Ultraschallschweißanlage nach einem der Ansprüche 1 bis 14, **dadurch gekennzeichnet, dass** die Halterung (5) eine Klemmvorrichtung aufweist, welche zwischen einer geöffneten Position, in welcher die Ultraschallschwingeinheit aus der Halterung (5) entnommen werden kann, und einer geschlossenen Position, in welcher die Klemmvorrichtung an zumindest zwei Haltepunkten mit der Ultraschallschwingeinheit in Kontakt tritt und eine Kraft auf diese ausübt, so dass die Ultraschallschwingeinheit gehalten wird, hin und her bewegbar ist, wobei vorzugsweise die Ultraschallschweißanlage eine Ultraschallschweißanlage nach Anspruch 8 ist und die Haltepunkte auf dem Außenwulst (6) angeordnet sind.

## Claims

1. An ultrasonic welding installation comprising an ultrasonic vibration unit having a sonotrode (1) and a converter (3), wherein the sonotrode (1) and the converter (3) are arranged in mutually adjacent relationship along a longitudinal axis and the ultrasonic vibration unit can be caused to resonate with an ultrasonic vibration in the direction of the longitudinal axis with a wavelength λ, wherein there is provided a support element (7) for supporting a force applied to the sonotrode (1) perpendicularly to the longitudinal axis, wherein the sonotrode (1) and the support element (7) have mutually corresponding support surfaces which at least when a force is applied to the sonotrode perpendicularly to the longitudinal axis come into contact with each other, **characterised in that** the support surfaces are of such a configuration that when they are in contact with each other they prevent a relative movement of the sonotrode (1) with respect to the support element (7) in the direction of the longitudinal axis and do not impede a rotation of the sonotrode (1) about the longitudinal axis.

2. The ultrasonic welding installation according to claim 1 **characterised in that** either the sonotrode (1) has a rib (6) and the support element (7) has a groove (30) or the sonotrode (1) has a groove and the support element (7) has a rib, wherein the rib (6) and the groove (30) have the corresponding support surfaces, wherein preferably the rib (6) or the groove (30) of the sonotrode (1) are arranged at a vibration node of the resonance vibration of the wavelength λ.

3. The ultrasonic welding installation according to claim 1 or claim 2 **characterised in that** there is provided a counterpart tool, wherein the sonotrode (1) and the counterpart tool are moveable relative to each other in a direction perpendicular to the longitudinal axis and the support element (7) is so positioned that a force exerted on the sonotrode (1) by the counterpart tool is transmitted to the support element (7).

4. The ultrasonic welding installation according to one of claims 2 and 3 **characterised in that** the rib (6) and the groove (30) are of a trapezoidal cross-section, wherein preferably the rib (6) and the groove (30) respectively have two support surfaces which do not extend parallel and which include with the longitudinal axis an angle which is less than 90°.

5. The ultrasonic welding installation according to one of claims 1 to 4 **characterised in that** the support element (7) is of such a configuration that it is reciprocable between two positions perpendicularly to the longitudinal axis wherein preferably there is provided a locking device with which the support element (7) can be locked in at least one position.

6. The ultrasonic welding installation according to one of claims 1 to 5 **characterised in that** there is provided a holder (5) for holding the ultrasonic vibration unit, wherein preferably the support element (7) is mounted to the holder (5).

7. The ultrasonic welding installation according to claim 6 **characterised in that** the holder (5) has an angle positioning device, wherein the angle positioning device and the ultrasonic vibration unit are of such a configuration that they can be connected together in positively locking relationship so that a rotation of the ultrasonic vibration unit about the longitudinal axis is prevented by the positively locking connection and a relative movement between the ultrasonic vibration unit and the holder (5) in the direction of the longitudinal axis is not prevented.

8. The ultrasonic welding installation according to claim 7 **characterised in that** the ultrasonic vibration unit has an outer bead (6) with at least one recess (21), wherein the angle positioning device has at least one projection (20) which corresponds to the recess (21) and which can engage into the recess (21) and thus provides the positively locking connection, wherein preferably the outer bead (6) has a plurality of recesses (21), wherein preferably the angle positioning device has a plurality of projections (20) corresponding to the plurality of recesses (21), wherein particularly preferably the ultrasonic vibration unit can be connected in positively locking relationship to the angle positioning device in a plurality of positions rotated relative to each other about the longitudinal axis.

9. The ultrasonic welding installation according to claim 8 **characterised in that** the at least one recess (21) of the outer bead (6) and the projection (20) of the angle positioning device have mutually corresponding contact surfaces which when the ultrasonic vibration unit is fitted into the angle positioning device come into contact with each other upon rotation of the ultrasonic vibration unit about the longitudinal axis, wherein preferably the contact surfaces of the recess (21) and/or the projection (20) are inclined relative to the longitudinal axis.

10. The ultrasonic welding installation according to one of claims 7 to 9 **characterised in that** the angle positioning device has a fixing element (9) for fixing the angle positioning device to a machine stand and has a coupling element (8) which is reciprocable between two positions in the direction of the longitudinal axis relative to the fixing element (9), wherein the positively locking connection can be produced between the coupling element (8) and the ultrasonic vibration unit, wherein preferably the coupling element (8) is elastically prestressed into one of the positions, wherein particularly preferably the prestressing is effected by means of at least one spring element (10).

11. The ultrasonic welding installation according to one of claims 8 to 10 **characterised in that** the outer bead (6) is arranged on the sonotrode (1) or an amplitude transformer (4) arranged between the sonotrode (1) and the converter (3), wherein preferably the bead (6) is arranged in a vibration node of the resonance vibration of the wavelength X.

12. The ultrasonic welding installation according to one of claims 1 to 11 **characterised in that** there is provided an amplitude transformer (4) arranged between the sonotrode (1) and the converter (3), wherein the amplitude transformer (4) is connected to the converter (3) and/or the sonotrode (1) by way of a positively locking connection which provides a positively locking relationship in all directions of the plane perpendicular to the longitudinal axis.

13. The ultrasonic welding installation according to claim 12 **characterised in that** the positively locking connection between the amplitude transformer (4) and the converter (3) or between the amplitude transformer (4) and the sonotrode (1) comprises a pin (22) and a corresponding opening (26), wherein preferably the pin (22) is arranged on the amplitude transformer (4) and the corresponding opening (26) is on the sonotrode (1) or the converter (3) and/or the pin (22) and the corresponding opening (26) are not of a rotationally symmetrical configuration with respect to the longitudinal axis, wherein preferably the pin (22) and the corresponding opening (26) are of a rotary symmetrical configuration about the longitudinal axis with a n-fold axis of rotation, wherein n is a natural number greater than 1, wherein particularly preferably the sonotrode (1) is of a rotary symmetrical configuration about the longitudinal axis with a m-fold axis of rotation and m is equal to n.

14. The ultrasonic welding installation according to claim 13 **characterised in that** the pin (22) and the corresponding opening (26) are of a conical configuration or have a conical portion.

15. The ultrasonic welding installation according to one of claims 1 to 14 **characterised in that** the holder (5) has a clamping device which is reciprocable between an opened position in which the ultrasonic vibration unit can be removed from the holder (5) and a closed position in which the clamping device comes into contact with the ultrasonic vibration unit at at least two holding points and exerts a force on same so that the ultrasonic vibration unit is held, wherein preferably the ultrasonic welding installation is an ultrasonic welding installation according to claim 8 and the holding points are arranged on the outer bead (6).

## Revendications

1. Installation de soudage par ultrasons comportant une unité émettrice d'ultrasons qui comprend une sonotrode (1) et un convertisseur (3), la sonotrode (1) et le convertisseur (3) étant agencés l'un à côté de l'autre le long d'un axe longitudinal et l'unité émettrice d'ultrasons pouvant être mise en résonance avec une vibration ultrasonore dans la direction de l'axe longitudinal à une longueur d'ondes λ, un élément de support (7) étant prévu pour supporter une force exercée perpendiculairement à l'axe longitudinal sur la sonotrode (1), la sonotrode (1) et l'élément de support (7) comprenant des surfaces de support correspondant les unes aux autres et qui peuvent entrer en contact mutuel, au moins lorsqu'une force est exercée perpendiculairement à l'axe longitudinal sur la sonotrode (1), **caractérisée en ce que** les surfaces de support sont conçues de sorte à empêcher un mouvement relatif de la sonotrode (1) par rapport à l'élément de support (7) dans la direction de l'axe longitudinal, lorsqu'elles sont en contact mutuel, et à ne pas empêcher une rotation de la sonotrode (1) autour de l'axe longitudinal.

2. Installation de soudage par ultrasons selon la revendication 1, **caractérisée en ce que** soit la sonotrode (1) comprend une nervure (6) et l'élément de support (7) comprend une rainure (30), soit la sonotrode (1) comprend une rainure et l'élément de support (7) comprend une nervure, la nervure (6) et la rainure (30) comprenant les surfaces de support correspondantes, de préférence, la nervure (6) ou la rainure (30) de la sonotrode (1) étant agencées dans un noeud de vibration de la vibration de résonance avec la longueur d'ondes λ.

3. Installation de soudage par ultrasons selon la revendication 1 ou 2, **caractérisée en ce qu'**un outil antagoniste est prévu, la sonotrode (1) et l'outil antagoniste pouvant être déplacés l'un par rapport à l'autre dans une direction perpendiculaire à l'axe longitudinal, et l'élément de support (7) étant positionné de telle sorte qu'une force exercée par l'outil antagoniste sur la sonotrode (1) soit transmise à l'élément de support (7).

4. Installation de soudage par ultrasons selon l'une quelconque des revendications 2 à 3, **caractérisée en ce que** la nervure (6) et la rainure (30) ont une section transversale trapézoïdale,
de préférence, la nervure (6) et la rainure (30) comprenant chacune deux surfaces de support qui ne sont pas parallèles et forment avec l'axe longitudinal un angle qui est inférieur à 90°.

5. Installation de soudage par ultrasons selon l'une quelconque des revendications 1 à 4, **caractérisée en ce que** l'élément de support (7) est conçu de manière à pouvoir effectuer un déplacement de va-et-vient entre deux positions, perpendiculairement à l'axe longitudinal, de préférence un dispositif de verrouillage étant prévu avec lequel l'élément de support (7) peut être verrouillé dans au moins une position.

6. Installation de soudage par ultrasons selon l'une quelconque des revendications 1 à 5, **caractérisée en ce qu'**une monture (5) est prévue pour maintenir l'unité émettrice d'ultrasons, l'élément de support (7) étant de préférence monté sur la monture (5).

7. Installation de soudage par ultrasons selon la revendication 6, **caractérisée en ce que** la monture (5) comprend un dispositif de positionnement angulaire, le dispositif de positionnement angulaire et l'unité émettrice d'ultrasons étant conçus de telle sorte qu'ils puissent être reliés l'un à l'autre par correspondance de forme, de sorte qu'une rotation de l'unité émettrice d'ultrasons autour de l'axe longitudinal soit empêchée par la liaison par correspondance de forme et qu'un déplacement relatif entre l'unité émettrice d'ultrasons et le support (5) ne soit pas empêché dans la direction de l'axe longitudinal.

8. Installation de soudage par ultrasons selon la revendication 7, **caractérisée en ce que** l'unité émettrice d'ultrasons comprend un bourrelet extérieur (6) avec au moins un évidement (21), le dispositif de positionnement angulaire comprenant au moins une saillie (20) correspondant à l'évidement (21), qui peut venir en prise dans l'évidement (21) et réalise ainsi la liaison par complémentarité de forme, de préférence le bourrelet extérieur (6) comprenant plusieurs évidements (21), de manière particulièrement préférée, le dispositif de positionnement angulaire comprenant plusieurs saillies (20) correspondant aux plusieurs évidements (21), de manière particulièrement préférée, l'unité émettrice d'ultrasons pouvant être reliée par complémentarité de forme au dispositif de positionnement angulaire dans plusieurs positions tournées relativement les unes par rapport aux autres autour de l'axe longitudinal.

9. Installation de soudage par ultrasons selon la revendication 8, **caractérisée en ce que** ledit au moins un évidement (21) du bourrelet extérieur (6) ainsi que la saillie (20) du dispositif de positionnement angulaire comprennent des surfaces de contact qui correspondent mutuellement et qui, lorsque l'unité émettrice d'ultrasons est insérée dans le dispositif de positionnement angulaire, entrent en contact mutuel lors d'une rotation de l'unité émettrice d'ultrasons autour de l'axe longitudinal, les surfaces de contact de l'évidement (21) et/ou de la saillie (20) étant de préférence inclinées par rapport à l'axe longitudinal.

10. Installation de soudage par ultrasons selon l'une quelconque des revendications 7 à 9, **caractérisée en ce que** le dispositif de positionnement angulaire comprend un élément de fixation (9) pour fixer le dispositif de positionnement angulaire sur un support de machine et un élément de couplage (8) qui peut être déplacé en va-et-vient dans la direction de l'axe longitudinal par rapport à l'élément de fixation (9) entre deux positions, la liaison par complémentarité de forme pouvant être établie entre l'élément de couplage (8) et l'unité émettrice d'ultrasons, l'élément de couplage (8) étant de préférence précontraint élastiquement dans l'une des positions, de manière particulièrement préférée, la précontrainte survenant à l'aide d'au moins un élément à ressort (10).

11. Installation de soudage par ultrasons selon l'une quelconque des revendications 8 à 10, **caractérisée en ce que** le bourrelet extérieur (6) est agencé sur la sonotrode (1) ou sur un transformateur d'amplitude (4) agencé entre la sonotrode (1) et le convertisseur (3), le bourrelet (6) étant de préférence agencé dans un noeud de vibration de la vibration de résonance avec la longueur d'ondes λ.

12. Installation de soudage par ultrasons selon l'une quelconque des revendications 1 à 11, **caractérisée en ce qu'**un transformateur d'amplitude (4) est prévu entre la sonotrode (1) et le convertisseur (3), le transformateur d'amplitude (4) est relié au convertisseur (3) et/ou à la sonotrode (1) par l'intermédiaire d'une liaison par complémentarité de forme qui assure une liaison par complémentarité de forme dans toutes les directions du plan perpendiculaire à l'axe longitudinal.

13. Installation de soudage par ultrasons selon la revendication 12, **caractérisée en ce que** la liaison par complémentarité de forme entre le transformateur d'amplitude (4) et le convertisseur (3) ou entre le transformateur d'amplitude (4) et la sonotrode (1) se compose d'un tourillon (22) et d'un évidement correspondant (26), de préférence, le tourillon (22) étant agencé sur le transformateur d'amplitude (4) et l'évidement correspondant (26) étant agencé sur la sonotrode (1) ou le convertisseur (3) et/ou le tourillon (22) et l'évidement correspondant (26) étant réalisés de manière non symétrique en rotation par rapport à l'axe longitudinal, le tourillon (22) et l'évidement correspondant (26) étant de préférence réalisés de manière symétrique en rotation autour de l'axe longitudinal avec un axe de rotation en n parties, n étant un nombre naturel supérieur à un, de manière particulièrement préférée, la sonotrode (1) étant réalisée de manière symétrique en rotation autour de l'axe longitudinal avec un axe de rotation en m parties, m étant égal à n.

14. Installation de soudage par ultrasons selon la revendication 13, **caractérisée en ce que** le tourillon (22) et l'évidement correspondant (26) sont réalisés en forme de cône ou ont une section en forme de cône.

15. Installation de soudage par ultrasons selon l'une quelconque des revendications 1 à 14, **caractérisée en ce que** la monture (5) comprend un dispositif de serrage qui peut effectuer un mouvement de va-et-vient entre une position ouverte dans laquelle l'unité émettrice d'ultrasons peut être retirée du support (5), et une position fermée dans laquelle le dispositif de serrage entre en contact avec l'unité émettrice d'ultrasons en au moins deux points d'arrêt et exerce une force sur celle-ci, de sorte que l'unité émettrice d'ultrasons soit maintenue, soit déplaçable en va-et-vient, de préférence, l'installation de soudage par ultrasons étant une installation de soudage par ultrasons selon la revendication 8 et les points d'arrêt étant agencés sur le bourrelet extérieur (6).
